# EUROPÄISCHE PATENTSCHRIFT

(11) **EP 1 837 108 B1**
(45) Veröffentlichungstag und Bekanntmachung des Hinweises auf die Patenterteilung: **15.10.2008**
(21) Anmeldenummer: 06005818.7
(22) Anmeldetag: 22.03.2006
(51) Int. Cl.: B23B 31/32, B23B 31/14

(54) **Membranspannfutter**
Diaphragm chuck
Mandrin à diaphragme

(43) Veröffentlichungstag der Anmeldung: 26.09.2007
(73) Patentinhaber: SMW-AUTOBLOK Spannsysteme GmbH, 88074 Meckenbeuren (DE)
(72) Erfinder: Rehm, Fritz, Dipl.-Ing., 88094 Oberteuringen (DE)
(74) Vertreter: Engelhardt, Guido

(56) Entgegenhaltungen:
- DE-A1- 19 919 408
- US-A- 2 719 721

## Beschreibung

Die Erfindung bezieht sich auf ein Membranspannfutter nach dem Oberbegriff des Anspruches 1.

Ein Membranspannfutter dieser Art ist durch die europäische Patentanmeldung Nr. 05018464.7 bekannt. Dieses Spannfutter hat sich in der Praxis bewährt. Um aber stets eine exakte Anlage an den beiden Referenzflächen zu gewährleisten, ist es jedoch erforderlich, die einzelnen Bauteile des Membranspannfutters mit einer hohen Präzision herzustellen. Dies erfordert einen erheblichen Fertigungsaufwand, dennoch können durch Biege- und/oder Kippmomente, die beim Anziehen der Spanneinrichtungen auftreten, die Spannbacken bzw. die Spannköpfe von den Anlageflächen an der Membran abgehoben werden. Dies wiederum kann zu Ungenauigkeiten bei der Bearbeitung eines Werkstückes führen.

Aufgabe der Erfindung ist es daher, das Membranspannfutter der vorgenannten Gattung in seiner Betriebsweise weiter zu verbessern, indem die bei der Verspannung der Ansatzstücke zwangläufig auftretenden Kräfte sich nicht ungünstig auf die Spannbacken bzw. die Spannköpfe auswirken können. Die hierbei erzeugten Kipp- und/oder Drehmomente sollen vielmehr nicht auf die Spannbacken bzw. die Spannköpfe einwirken können. Der dazu erforderliche Bauaufwand soll gering gehalten werden, dennoch soll die Gewähr gegeben sein, dass derartige Kräfte nicht auf die Spannbacken übertragen werden.

Gemäß der Erfindung wird dies bei einem Membranspannfutter mit den Merkmalen des Anspruchs 1 erreicht.

Das Zwischenglied kann hierbei in vorteilhafter Weise durch ein im Bereich einer Unterteilung eines Ansatzstückes angeordnetes Kugelgelenk gebildet sein.

Das Kugelgelenk kann durch ein von einem der beiden Teile des unterteilten Ansatzstückes abstehendes Koppelglied, das abschnittsweise mit einer kugeligen Außenmantelfläche versehen ist, und einer in das andere Teil des Ansatzstückes eingearbeiteten Ausnehmung, die auf der dem Koppelglied zugekehrten Innenmantelfläche eine korrespondierende Anlagefläche aufweist, gebildet sein, wobei auf das Koppelglied eine Druckfeder einwirken sollte, die an dem Teil des Ansatzstückes, in das das Koppelglied eingreift, abgestützt. Außerdem sollte das Koppelglied begrenzt verdrehbar in der Ausnehmung des dieses aufnehmenden Teils des Spanneinsatzes gehalten sein. Zur Verdrehsicherung kann ein in dieses eingesetzter Bolzen vorgesehen werden, der in einer in dem das Koppelglied aufnehmenden Teil des Ansatzstückes eingearbeiteten Bohrung mit Spiel in Umfangsrichtung abgestützt ist.

Zur vereinfachten Montage des Kugelgelenkes ist es angezeigt, das Koppelglied in seiner Breite und die dieses aufnehmende Ausnehmung in ihrer lichten Weite derart zu bemessen, dass das Koppelglied in einer um 90° gegenüber der Betriebsstellung verschwenkten Lage in die Ausnehmung einführbar ist, nach der Verdrehung aber sicher in der Ausnehmung abgestützt ist.

Um das Eindringen von Verunreinigungen in das Kugelgelenk auszuschließen, sollte die Trennstelle des Ansatzstückes durch eine an den Stirnflächen des einen Teils oder beider Teile des Ansatzstückes angeformter Labyrinthe abgedichtet sein.

Nach einer andersartigen Ausgestaltung kann das Zwischenglied durch einen Verbindungsbolzen gebildet sein, der im Bereich einer Unterteilung des Ansatzstückes in dessen mit Abstand zueinander angeordneten Teilen angesetzt und in einem oder beiden Teilen des Ansatzstückes mit axialem Spiel gehalten ist. Der Verbindungsbolzen kann hierbei an einem oder beiden Enden jeweils mittels eines in die Teile des Ansatzstückes eingesetzten Querstiftes gehalten sein, die in in den Verbindungsbolzen eingearbeitete Längsnuten oder unmittelbar in diesem mit axialem Spiel eingreifen.

Nach einer weiteren Ausführungsvarianten kann das Zwischenglied auch aus einer in das Ansatzstück integrierten elastisch verformbaren Zone bestehen, die jeweils als Zwischenstück in Form eines Bolzens oder einer Platte gestaltet sein kann. Durch in die Ansatzstücke eingearbeitete Freisparungen kann das Zwischenstück hergestellt werden.

Gemäß einer andersartigen Ausgestaltung kann das Zwischenglied aus einer Gewindestange bestehen, die im Bereich einer Unterteilung der Ansatzstücke mit einem oder beiden Enden jeweils in in ein oder in beide Teile des Ansatzstückes eingearbeitete Gewindebohrungen eingeschraubt ist.

Zweckmäßig ist es ferner, wenn die Ansatzstücke der Spannbacken bzw. der Spannköpfe zumindest die unmittelbar an diesen angeformten Teile der Ansatzstücke mit radialem Spiel in der Membran und den Gegengewichten angeordnet sind.

Wird ein Membranspannfutter gemäß der Erfindung ausgebildet, so sind nicht nur die Vorteile der bekannten Ausgestaltung gegeben, sondern es ist auch gewährleistet, dass durch Momente, die durch Betätigen der Spanneinrichtungen ausgelöst werden, um die Ansatzstücke zu verspannen, die Spannbacken bzw. die Spannköpfe nicht ungünstig beeinflusst werden. Kipp- und/oder Torsionsmomente werden nämlich über die in unterschiedlicher Weise ausgebildeten Zwischenglieder nicht mehr auf die Spannbacken übertragen, auf diese wirken vielmehr ausschließlich axial gerichtete Zug-Kräfte ein. Die Spannbacken bzw. die Spannköpfe werden demnach nicht von den Referenzflächen abgehoben, eine stets gleichbleibende präzise Einspannung eines Werkstückes ist somit stets gewährleistet.

In der Zeichnung sind einige Ausführungsvarianten eines gemäß der Erfindung ausgebildeten Membranspannfutters dargestellt, die nachfolgend im Einzelnen erläutert sind. Hierbei zeigen:
- Figur 1: ein mit Gegengewichten versehenes Membranspannfutter mit eingespanntem Werkstück, in einem Axialschnitt,
- Figur 2: einen Ausschnitt aus Figur 1 mit einem in einem Ansatzstück eingesetztes Kugelgelenk, in einer vergrößerten Wiedergabe,
- Figur 3: einen Schnitt nach der Linie III - III der Figur 2,
- Figur 4: die beiden ineinander zu verriegelnden Teile des Ansatzstückes aus Figur 2, in einer Explosionsdarstellung,
- Figur 5: einen Ausschnitt gemäß Figur 2 mit einer andersartig ausgebildeten Spanneinrichtung,
- Figur 6: ein mit einer elastischen Zone als Zwischenglied versehenes Ansatzstück, in einer Darstellung gemäß Figur 2 und
- Figuren 7 und 8: jeweils ein unterteiltes Ansatzstück mit unterschiedlich ausgebildeten Zwischengliedern, in Darstellungen gemäß Figur 2.

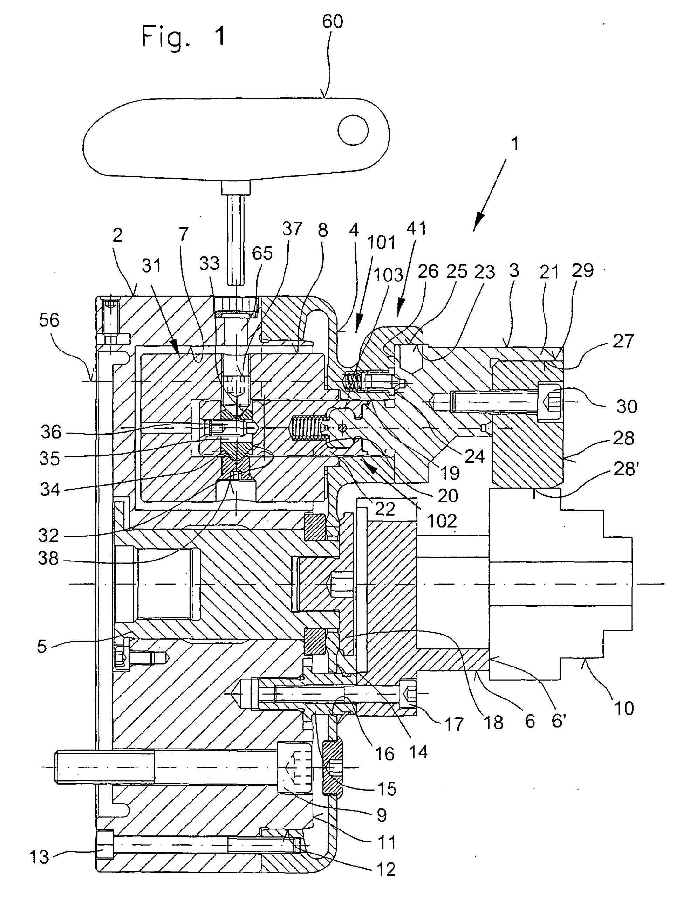

Das in Figur 1 dargestellte und mit 1 bezeichnete Membranspannfutter dient zum Einspannen insbesondere von hochwertigen Werkstücken 10, wie z.B. Zahnrädern, und besteht im wesentlichen aus in einem Futterkörper 2 eingesetzte auf das Werkstück 10 einwirkende Spannbacken 3, die mit einer an der Stirnfläche 11 in einer Ausnehmung 12 des Futterkörpers 2 in dessen äußeren Bereich mittels Schrauben 13 befestigten verformbaren Membran 4 aus einem metallischen Werkstoff trieblich verbunden sind.

Zur Betätigung der Membran 4 ist ein zentrisch angeordnetes Betätigungsglied 5 vorgesehen, in das auf dem den Spannbacken 3 abgewandten Ende eine durch eine nicht gezeigte Servoeinrichtung verstellbare Zugstange einschraubbar ist. Am anderen Ende des Betätigungsgliedes 5 ist mittels einer Scheibe 18 die mit einem ballig ausgebildeten Bund 14 versehene Membran 4 eingespannt.

Des Weiteren sind in in den Futterkörper 2 eingearbeitete Ausnehmungen 7 den Spannbacken 3 zugeordnete Gegengewichte 8, durch die den von den Spannbacken 3 bei Rotation des Membranspannfutters 1 erzeugten Fliehkräften entgegenwirkt wird, eingesetzt, mit denen die Spannbacken 3 mittels an deren Spannköpfen 21 angeformter abgesetzter Ansatzstücke 22 mit Hilfe von Spanneinrichtungen 31 lösbar, aber dennoch fest verbindbar sind. Die z.B. als zylindrische Schäfte ausgebildeten Ansatzstücke 22 durchgreifen dazu in der Membran 4 vorgesehene Ausnehmungen 19 und ragen in in die Gegengewichte 8 eingearbeitete Bohrungen 20 hinein, in denen sie mittels der Spanneinrichtungen 31 arretierbar sind.

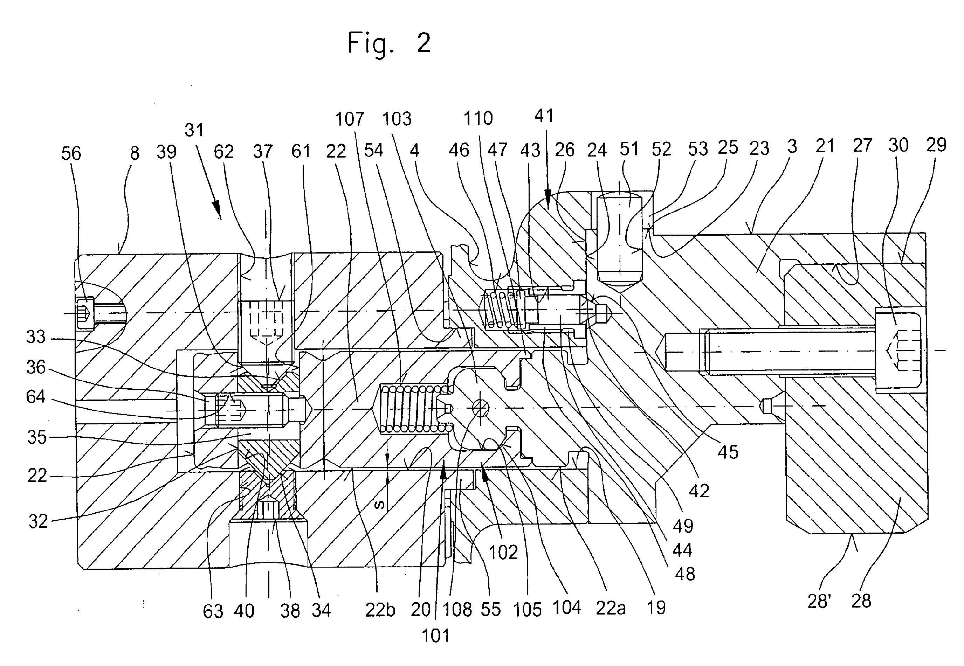

Die Spanneinrichtungen 31 sind jeweils, wie dies insbesondere der Fig. 2 zu entnehmen ist, durch einen radial begrenzt verschiebbaren Pendelbolzen 32 und zwei Halteschrauben 37 und 38 gebildet, die zur Erzeugung einer in Achsrichtung der Ansatzstücke 22 wirkenden Kraft in Einbaulage achsversetzt zueinander angeordnet sind. Die Pendelbolzen 32 sind dazu in in die Ansatzstücke 22 eingearbeiteten Bohrungen 61 eingesetzt, die Halteschrauben 37 bzw. 38 dagegen in in die Gegengewichte 8 eingearbeitete Gewindebohrungen 62 bzw. 63 eingeschraubt.

Außerdem sind die Pendelbolzen 32 jeweils mit einem Innenkonus 33 und einem Außenkonus 34 ausgestattet, die mit einem an den Halteschrauben 37 bzw. 38 angearbeiteten Außenkonus 39 bzw. einem Innenkonus 40 zusammenwirken. Zur Halterung der Pendelbolzen 32 in den Ansatzstücken 23 sind in diese Gewindebohrungen 64 eingearbeitet, und die Pendelbolzen 32 sind mit Langlöchern 35 versehen, in die in die Gewindebohrungen 64 eingeschraubte Stifte 36 eingreifen.

Die Spanneinrichtungen 31 wirken in der Weise, dass durch Einschrauben der über in dem Futterkörper 2 vorgesehenen mit den Gewindebohrungen 62 fluchtende Bohrungen 65 zugänglichen Halteschrauben 37, z.B. mittels eines Innensechskantschlüssels 60, in den Innenkonus 33 der Pendelbolzen 32 diese mit ihrem Außenkonus 34 an dem Innenkonus 40 der Halteschrauben 38 abgestützt werden, so dass durch die Schrägflächen eine Kraft in Achsrichtung der Ansatzstücke 22 erzeugt wird und die Spannbacken 3 bzw. deren Spannköpfe 21 gegen die Membran 4 gepreßt werden. Vorraussetzung ist allerdings, dass die Pendelbolzen 32 gegenüber den Halteschrauben 37 und 38 geringfügig achsversetzt sind.

Um die Spannbacken 3 lagegenau an der Membran 4 abstützen zu können, ist diese mit einer ersten Referenzfläche 23 und zweiten Referenzfläche 24 ausgestattet, die achssenkrecht zueinander ausgerichtet sind und wobei die erste Referenzfläche 23 in Spannstellung des Membranspannfutters 1 achsparallel zu dessen Längsachse verläuft. Außerdem sind die als Schäfte ausgebildeten Ansatzstücke 22 der Spannköpfe 21 mit einem geringen Spiel "s" in den in der Membran 4 eingearbeiteten Bohrungen 19 und den in den Gegengewichten 8 vorgesehenen Bohrungen 20 angeordnet, so dass eine Ausrichtung auf die erste Referenzfläche 23 ohne weitere möglich ist.

Eine selbsttätige Anlage der Spannköpfe 21 an der ersten Referenzfläche 23 mit einer Anlagefläche 25 wird mittels Federrasten 41 bewerkstelligt, durch die die Spannköpfe 21 nach außen gedrückt und mittels der Spanneinrichtungen 31 an dieser fixiert werden. Gleichzeitig erfolgt die Anlage mit der Anlagefläche 26 an der Referenzfläche 24 der Membran 4.

Die Federrasten 41 bestehen hierbei, wie dies ebenfalls dem in Figur 2 vergrößert wiedergegebenen Ausschnitt zu entnehmen ist, aus einem in eine in die Membran 4 eingearbeiteten Bohrung 43 eingesetzten Stift 44, auf den eine Druckfeder 46 einwirkt und der mit einer kegeligen Spitze 45 in eine in die der zweiten Referenzfläche 24 gegenüberliegenden Anlagefläche 26 des Spannkopfes 21 eingearbeitete kegelige Bohrung 42 eingreift. Der Stift 44 ist mit einem Bund 47 versehen und verschiebbar in einer Hülse 48 eingesetzt, die in die mit einem Innengewinde 49 ausgestattete Bohrung 43 eingeschraubt ist. Durch die Kraft der Druckfeder 46 wird somit der Spannkopf 21 beim Einsetzen der Spannbacken 3 gegen die erste Referenzfläche 23 nach außen gepresst und in dieser Lage bis zum Verspannen der Spannbacken 3 mit der Membran 4 mittels der Spannrichtungen 31 fixiert.

Um die Gegengewichte 8 formschlüssig mit der Membran 4 zu verbinden, damit diese deren Verstellbewegungen folgen, sind die Gegengewichte 8 mittels Schrauben 56 fest mit der Membran 4 verschraubt. Außerdem sind in die Membran 4 den Gegengewichten 8 zugeordnete Ausnehmungen 54 eingearbeitet und die Gegengewichte 8 sind jeweils mit einem Ansatz 55 versehen, die in die Ausnehmungen 54 eingreifen und in diesen zentriert sind. Die Spannbacken 3 bilden auf diese Weise im verspannten Zustand mit den Gegengewichten 8 eine Einheit.

Um die Spannköpfe 21 in Umfangsrichtung leicht ausrichten zu können, sind an diesen radial nach außen abstehende Stifte 51 angebracht, die in Bohrungen 52 eingesetzt sind. Des Weiteren ist die Membran 4 mit in Achsrichtung offenen Schlitzen 53 versehen, in die Stifte 51 bei der Montage der Spannbacken 3 eingeführt werden. Die Lage der Stifte 51 ist jeweils auf die Federrasten 41 ausgerichtet, so dass deren Stifte 44 ohne weiteres in die Bohrungen 42 eingreifen können.

Bei dem in Figur 1 gezeigten Ausführungsbeispiel wirken die Spannköpfe 21 der Spannbacken 3 nicht unmittelbar auf das Werkstück 10 ein, an den Spannköpfen 21 sind vielmehr mit einer Spannfläche 28' versehene Einsatzbacken 28 angebracht, die an den Anlageflächen 27 der Spannköpfe 21 mit ihrer Anlagefläche 29 anliegen und mittels Schrauben 30 an diesen befestigt sind. Die Einsatzbacken 28 sind demnach leicht auswechselbar. Selbstverständlich ist es auch möglich, die Spannköpfe 21 als einstückige Spannbacken auszubilden.

Zur Abstützung des Werkstückes 10 ist an dem Futterkörper 2 ein dreiarmiger Anschlagring 6 angebracht, der zwischen die Spannbacken 3 hineinragt und Anlageflächen 6' aufweist. Zur Halterung des Anschlagringes 6 sind in den Futterkörper 2 eingesetzte Hülsen 15, die entsprechende in die Membran 4 eingearbeitete Ausnehmungen 16 durchgreifen, vorgesehen. Mittels Schrauben 17 ist der Anschlagring 6 an den Hülsen 15 befestigt. Die Stirnfläche des Anschlagringes 6 ist als Anlagefläche 6' für das Werkstück 10 ausgebildet. Durch weitere Schrauben 9, die über in die Membran 4 eingearbeiteten und durch Stopfen verschlossene Bohrungen zugänglich sind, ist der Futterkörper 2 des Membranspannfutters 1 an einer Werkzeugmaschine zu befestigen.

Bei dem Membranspannfutter 1 sind demnach lediglich die Referenzflächen 23 und 24 maßgenau zu bearbeiten. Die Spannbacken 3 und die Einsatzbacken 21 können dagegen gesondert gefertigt und wahlweise beigestellt werden. Da die Anlageflächen 25 und 27 der Spannköpfe 21 und die Anlagefläche 29 der Einsatzbacken 28 und deren Spannfläche 28' in Spannstellung des Membranspannfutters 1 stets konzentrisch zueinander verlaufen, ist es möglich, die einzelnen Durchmesser der Anlageflächen aufeinander abzustimmen und entsprechend dem jeweiligen Arbeitsvorgang zu wählen, ohne dass die Referenzfläche 23 beeinflusst wird und ein Einschleifen erforderlich ist.

Beim Anziehen der Spanneinrichtung 31 können Biege- und/oder Torsionsmomente auftreten, die sich mitunter ungünstig auf die Spannbacken 3 bzw. die Spannköpfe 4 auswirken können. Durch derartige Momente können diese insbesondere von der ersten Referenzfläche 23 abgehoben werden, so dass eine exakte Bearbeitung des Werkstückes 10 nicht mehr gegeben ist.

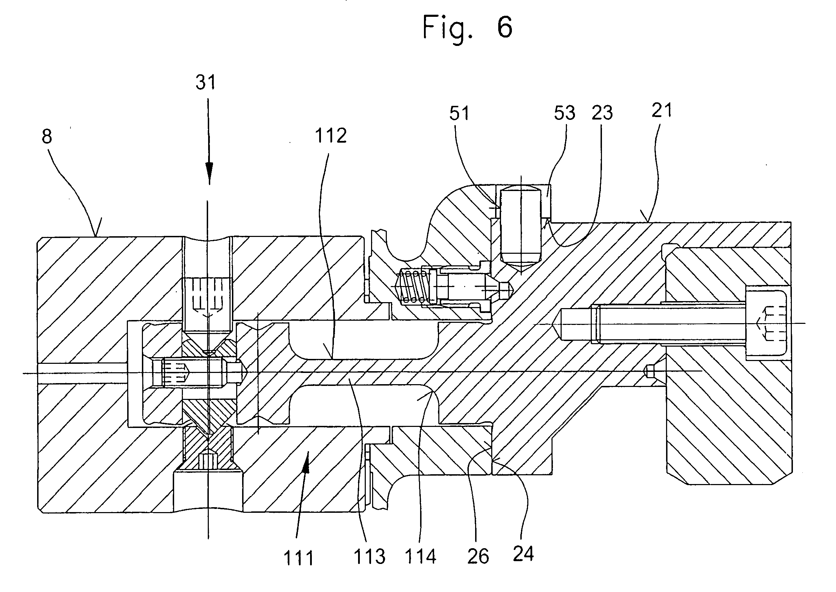

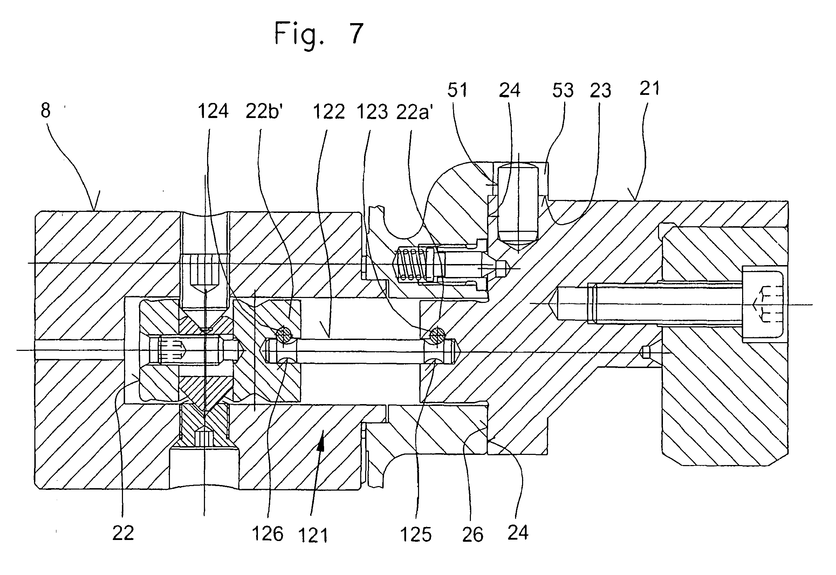

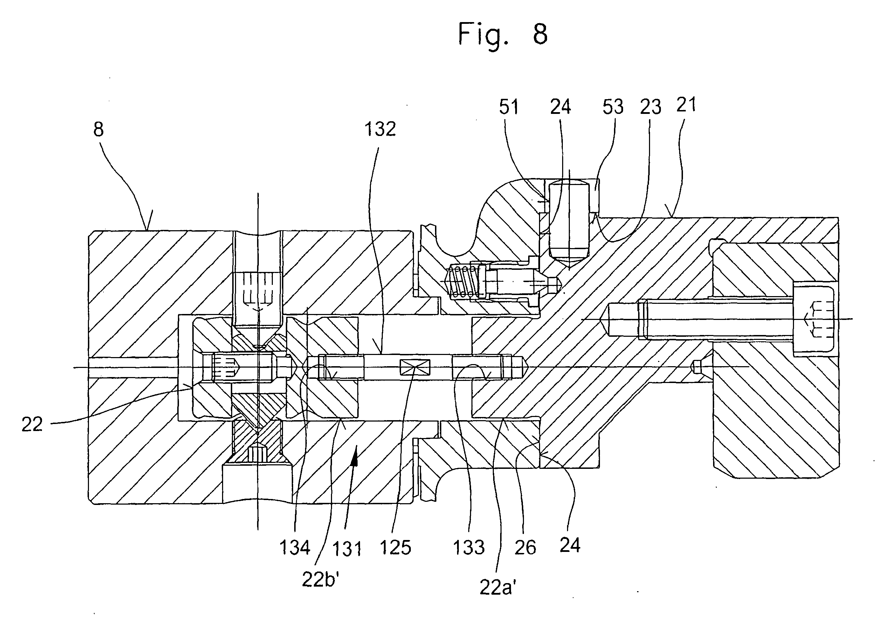

Um zu verhindern, dass durch die Spanneinrichtung 31 hervorgerufene Kipp- und/oder Drehmomente auf die Spannbacken 3 bzw. die Spannköpfe 21 übertragen werden, sind in die Ansatzstücke 22 im Bereich zwischen den Spanneinrichtungen 31 bzw. 71 und den Spannköpfen 21 unterschiedlich ausgebildete Zwischenglieder 101 (Figuren 1 bis 5), 111 (Figur 6), 121 (Figur 7) und 131 (Figur 8) eingesetzt, durch die derartige Momente eliminierbar sind. Über die Zwischenglieder 101, 111, 121 bzw. 131 werden somit ausschließlich Zugkräfte auf die Spannbacken 3 bzw. die Spannköpfe 21 übertragen, ein Abheben von der ersten Referenzfläche 23 ist dadurch ausgeschlossen.

Gemäß den Figuren 1 bis 5 besteht das Zwischenglied 101 aus einem Kugelgelenk 102, das dadurch gebildet ist, dass die Ansatzstücke 22 jeweils unterteilt sind und an dem mit dem Spannkopf 21 verbundenen Teil 22a des Ansatzstückes 22 ein Koppelglied 103, das eine kugelige Anlagefläche 104 aufweist, angeformt und in das gegenüberliegende Teil 22b eine Ausnehmung 105 eingearbeitet ist, die eine entsprechend gestaltete, der Anlagefläche 104 zugeordnete Innenmantelfläche 106 aufweist. Auf das Koppelglied 103 wirkt eine Druckfeder 107 ein, die an dem Teil 22b abgestützt ist, so dass stets eine exakte Anlage der Flächen 104 und 106 aneinander gewährleistet ist. Durch einen Bolzen 108, der in Umfangsrichtung mit Spiel in in das Teil 22b eingearbeitete Bohrungen 109 gehalten ist, ist der Verdrehweg des Koppelgliedes 103 begrenzt. Außerdem ist die Trennstelle zwischen den beiden Teilen 22a und 22b durch ein Labyrinth 110 abgedichtet, das Eindringen von Verunreinigungen in das Kugelgelenk 102 ist somit nahezu ausgeschlossen.

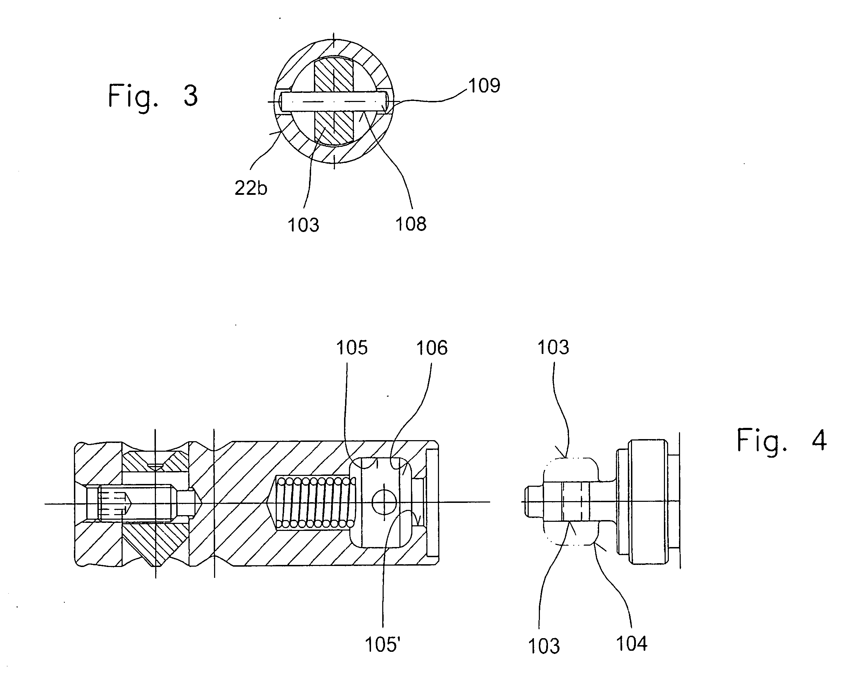

Um das Koppelglied 103 in die Ausnehmung 105 einführen und in dieser verriegeln zu können, ist das Koppelglied 103, wie dies in Figur 4 gezeigt ist, seitlich abgeflacht ausgebildet und auf eine Breite reduziert, die kleiner bemessen ist, als die lichte Weite des Eingangsbereiches 105' der Ausnehmung 105. Nach dem Einführen des Koppelgliedes 103 in der in Figur 4 gezeigten Lage in die Ausnehmung 105 wird dieses um 90° in die in den Figuren 1 und 2 dargestellte Betriebsstellung verdreht, so dass das Koppelglied 103 in der Ausnehmung 105 arretiert ist. In Figur 4 ist die Höhe des Koppelgliedes 103 strichpunktiert eingezeichnet.

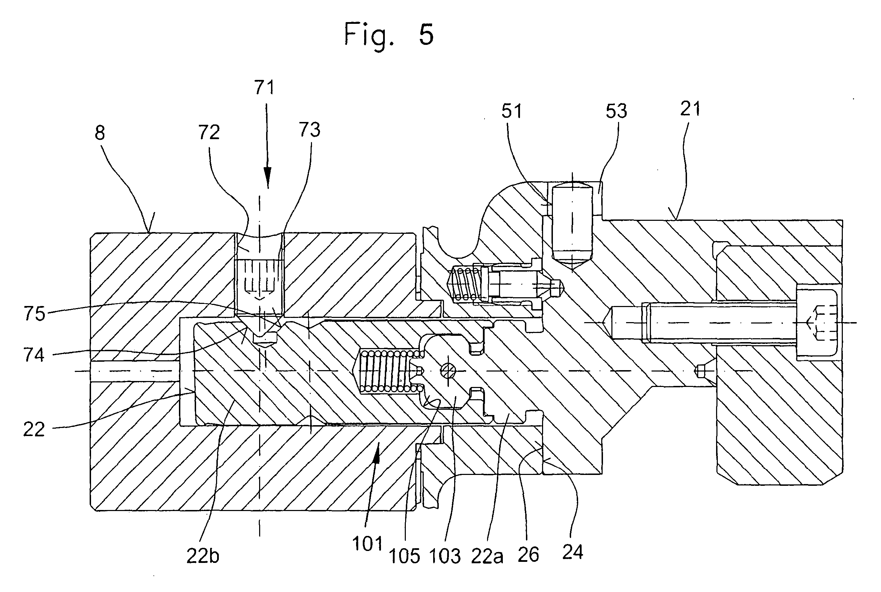

Als Spanneinrichtung 71 kann jeweils auch, wie dies in Figur 5 gezeigt ist, eine Spannschraube 73 vorgesehen werden, die in eine in die Gegengewichte 8 eingearbeitete Gewindebohrung 72 eingeschraubt ist und mit einer kugelig ausgebildeten Spitze. 74 in eine in das Teil 22b des Ansatzstückes 22 eingearbeitete kegelige Bohrung 75 eingreift. Das Teil 22b, das durch die Spannschraube 73 gegen das Gegengewicht 8 gepresst wird, wird dadurch, aber auch aufgrund der zusammenwirkenden Spitze 74 der Spannschraube 73, mit der kegeligen Bohrung 75 nach links verschoben. Die dabei auftretende Zugkraft wird auf das Teil 22a des Spannkopfes 21 übertragen, so dass dieser gegen die beiden Referenzflächen 23 und 24 gepresst wird, die Schrägstellung des Teils 22b wird aber durch das Zwischenglied 101 ausgeglichen, indem in dem Kugelgelenk 102 eine Drehbewegung vorgenommen wird.

Bei der Ausgestaltung nach Figur 6 ist das Zwischenglied 111 durch eine in dem Bereich zwischen dem Spannkopf 21 und der Spanneinrichtung 31 in dem Ansatzstück 22 vorgesehene elastisch verformbare Zone 112 gebildet. In das Ansatzstück 22 ist hierbei eine umlaufende Freisparung 114 eingearbeitet, so dass ein Zwischenstück 113 in Form eines Bolzens oder einer Platte verbleibt, das eine Verformung des Ansatzstückes 22 ermöglicht. Durch die Spanneinrichtung 31 ausgelöste Kipp- und/oder Drehmomente werden somit ebenfalls nicht auf den Spannkopf 21 übertragen.

Gemäß Figur 7 besteht das Zwischenglied 121 aus einem Verbindungsbolzen 122, der in die beiden durch eine Unterteilung geschaffenen und mit seitlichem Abstand zueinander angeordneten Teile 22a' und 22b' des Ansatzstückes 22 eingesetzt ist. Mittels Querstiften 123 und 124, die in in dem Verbindungsbolzen 122 eingearbeitete umlaufende Längsnuten 125 bzw. 126 eingreifen, ist dieser verdrehbar gehalten. Durch die Spanneinrichtung 31 bedingte Momente werden somit von dem Verbindungsbolzen 122 aufgenommen, der Spannkopf 31 wird in seiner Anlage an den Referenzflächen 23 und 24 durch derartige Momente nicht beeinträchtigt.

Bei der Ausführungsvariante nach Figur 8 dient als Zwischenglied 131 ein Gewindebolzen 132, der mit seinen Enden in Gewindebohrungen 133 und 134, die in die beiden mit seitlichem Abstand zueinander angeordneten Teile 22a' und 22b' des Ansatzstückes 22 eingeschraubt ist. Mit Hilfe einer Schlüsselöffnung 125 ist der Gewindebolzen 132 einstellbar.

Da die Gewindebohrungen 133 und/oder 134 Verdrehungen des Gewindebolzens 132 ermöglichen, werden von der Spanneinrichtung 31 hervorgerufene Momente nicht auf das Teil 22a' des Ansatzstückes 22 und demnach auch nicht auf die Spannköpfe 21 übertragen.

Bei der Einspannung unterschiedlicher Werkstücke ist demnach stets eine hohe Einspanngenauigkeit gegeben.

## Patentansprüche

1. Membranspannfutter (1) mit in einem Futterkörper (2) eingesetzten auf ein einzuspannendes Werkstück (10) einwirkenden Spannbacken (3), die mit einer an der Stirnfläche (11) des Futterkörpers (2) in dessen äußeren Bereich befestigten und durch ein zentrisch angeordnetes axial verschiebbares Betätigungsglied (5) verformbaren Membran (4) trieblich verbunden sind, wobei in Ausnehmungen (7) des Futterkörpers (2) den Spannbacken (3) zugeordnete Gegengewichte (8) eingesetzt und die als Spannköpfe (21) gestalteten Spannbacken (3) jeweils mit einem abgesetzten in Richtung des Futterköpers (2) axial gerichteten und etwa achsparallel zu diesem verlaufenden Ansatzstück (22) versehen sind, die in in den Gegengewichten (8) eingearbeiteten Freisparungen (20) gehalten und die Spannbacken (3) mittels in die Ansatzstücke (22) eingreifender und in deren Achsrichtung wirkender Spanneinrichtungen (31, 71) mit der Membran (3) sowie den Gegengewichten (8) verspannbar und die Spannbacken (3) bzw. die Spannköpfe (21) unmittelbar an einer ersten in Spannstellung achsparallel zu dem Futterkörper (2) verlaufenden Referenzfläche (23) und einer zweiten achssenkrecht zu dieser an der Membran (4) angearbeiteten Referenzfläche (24) abgestützt sind,
**dadurch gekennzeichnet,**
**dass** die Ansatzstücke (22) der Spannbacken (3) bzw. der Spannköpfe (21) in dem Bereich zwischen diesen und den Spanneinrichtungen (31, 71) jeweils mit einem Zwischenglied (101; 111; 121; 131) versehen sind, mittels dem Biege- und/oder Drehmomente der Spannreinrichtungen (31, 71) eliminierbar und über das ausschließlich axial gerichtete Zugkräfte auf die Spannbacken(3) bzw. die Spannköpfe (21) übertragbar sind.

2. Membranspannfutter nach Anspruch 1,
**dadurch gekennzeichnet,**
**dass** das Zwischenglied (101) durch ein im Bereich einer Unterteilung eines Ansatzstückes (22) angeordnetes Kugelgelenk (102) gebildet ist.

3. Membranspannfutter nach Anspruch 2,
**dadurch gekennzeichnet,**
**dass** das Kugelgelenk (102) durch ein von einem der beiden Teile (22a) des unterteilten Ansatzstückes (22) abstehendes Koppelglied (103), das abschnittsweise mit einer kugeligen Außenmantelfläche (104) versehen ist, und einer in das andere.Teil (22b) des Ansatzstückes (22) eingearbeiteten Ausnehmung (105), die auf der dem Koppelglied (103) zugekehrten Innenmantelfläche eine korrespondierende Anlagefläche (106) aufweist, gebildet ist.

4. Membranspannfutter nach Anspruch 2 oder 3,
**dadurch gekennzeichnet,**
**dass** auf das Koppelglied (103) eine Druckfeder (107) einwirkt, die an dem Teil (22b) des Ansatzstückes (22), in das das Koppelglied (103) eingreift, abgestützt ist.

5. Membranspannfutter nach Anspruch 2 bis 4,
dass das Koppelglied (103) begrenzt verdrehbar in der Ausnehmung (105) des dieses aufnehmenden Teils (22b) des Ansatzstückes (22) gehalten ist.

6. Membranspannfutter nach Anspruch 5,
**dadurch gekennzeichnet,**
**dass** zur Verdrehsicherung des Koppelgliedes (103) ein in dieses eingesetzter achssenkrecht zur Längsachse des Ansatzstückes (22) gerichteter Bolzen (108) vorgesehen ist, der in einer in dem das Koppelglied (103) aufnehmenden Teil (22b) des Ansatzstückes (22) eingearbeiteten Bohrung (109) in Umfangsrichtung mit Spiel abgestützt ist.

7. Membranspannfutter nach einem oder mehreren der Ansprüche 2 bis 6,
**dadurch gekennzeichnet,**
**dass** das Koppelglied (103) in seiner Breite und die dieses aufnehmende Ausnehmung (105, 105') in ihrer lichten Weite derart bemessen sind, dass das Koppelglied (103) in einer um 90° gegenüber der Betriebsstellung verschwenkten Lage in die Ausnehmung (105, 105') einführbar ist.

8. Membranspannfutter nach einem oder mehreren der Ansprüche 2 bis 7,
**dadurch gekennzeichnet,**
**dass** die Trennstelle des Ansatzstückes (22) durch eine an den Stirnflächen des einen Teils (22b) oder beider Teile (22a, 22b) des Ansatzstückes (22) angeformter Labyrinthe (110) abgedichtet ist.

9. Membranspannfutter nach Anspruch 1,
**dadurch gekennzeichnet,**
**dass** das Zwischenglied (111) aus einer in das Ansatzstück (22) integrierten elastisch verformbaren Zone (112) besteht.

10. Membranspannfutter nach Anspruch 9,
**dadurch gekennzeichnet,**
**dass** die elastisch verformbaren Zonen (112) jeweils aus einem als Bolzen oder als Platte ausgebildeten Zwischenstück (113) bestehen, die durch in die Ansatzstücke (22) eingearbeitete Freisparungen (104) gebildet sind.

11. Membranspannfutter nach Anspruch 1,
**dadurch gekennzeichnet,**
**dass** das Zwischenglied (121) durch einen Verbindungsbolzen (122) gebildet ist, der im Bereich einer Unterteilung des Ansatzstückes (22) in dessen mit Abstand zueinander angeordnete Teile (22a', 22b') angesetzt und in einem oder beiden Teilen (22a, 22b) des Ansatzstückes (22) mit axialem Spiel gehalten ist.

12. Membranspannfutter nach Anspruch 11,
**dadurch gekennzeichnet,**
**dass** der Verbindungsbolzen (112) an einem oder beiden Enden jeweils mittels eines in die Teile (22a', 22b') des Ansatzstückes(22) eingesetzten Querstiftes (113, 114) gehalten ist, die in in den Verbindungsbolzen (112) eingearbeitete Längsnuten (115, 116) oder unmittelbar in diesem mit axialem Spiel eingreifen.

13. Membranspannfutter nach Anspruch 1,
**dadurch gekennzeichnet,**
**dass** das Zwischenglied (131) aus einer Gewindestange (132) besteht, die im Bereich einer Unterteilung der Ansatzstücke (22a', 22b') jeweils mit einem oder beiden Enden in in ein oder beide Teile (22a', 22b') des Ansatzstückes (22) eingearbeitete Gewindebohrungen (113, 114) eingeschraubt ist.

14. Membranspannfutter nach einem oder mehreren
der Ansprüche 1 bis 13,
**dadurch gekennzeichnet,**
**dass** die Ansatzstücke (22) der Spannbacken (3) bzw. der Spannköpfe (21), zumindest die unmittelbar an diesen angeformten Teile (22a') der Ansatzstücke (22), mit radialem Spiel (S) in der Membran (4) und den Gegengewichten (8) angeordnet sind.

## Claims

1. A diaphragm chuck (1) with clamping jaws (3) inserted in a chuck body (2) that act on a workpiece (10) to be clamped and that are in a driven connection with a diaphragm (4) that is located on the front face (11) of the chuck body (2), attached to the outer area of the chuck body (2) and can be deformed by means of a centrally arranged, axially adjustable actuator (5), with counterweights (8) assigned to clamping jaws (3) located in recesses (7) in the chuck body (2) and each of the clamping jaws (3) designed as clamping heads (21) being equipped with an offset contact piece (22) that is axially arranged in the direction of the chuck body (2) and runs approximately axially in parallel to the chuck body (2), these contact pieces (22) being held in recesses (20) worked into the counterweights (8) and the clamping jaws (3) being clamped against the diaphragm (3) and the counterweights (8) by means of quick-clamping devices (31, 71) that engage in the contact pieces (22) and act in the axial direction of the contact pieces (22), and the clamping jaws (3) or clamping heads (21) are directly supported against a first reference surface (23) running axially in parallel to the chuck body (2) in the clamping position and against a second reference surface (24) that is worked onto the diaphragm (4) at right angles to the first reference surface (23),
**characterised in that,**
the contact pieces (22) of the clamping jaws (3) or clamping heads (21) are each equipped with an intermediate element (101; 111; 121; 131) in the area between these and the quick-clamping devices (31, 71), by means of which intermediate element (101; 111; 121; 131) the flexural moments and/or rotational torques of the quick-clamping devices (31, 71) can be eliminated and it is possible to transmit exclusively axially vectored tensile forces onto the clamping jaws (3) or clamping heads (21).

2. The diaphragm chuck in accordance with Claim 1,
**characterised in that,**
the intermediate element (101) is formed by a ball joint (102) arranged in the area of a subdivision of a contact piece (22).

3. The diaphragm chuck in accordance with Claim 2,
**characterised in that,**
the ball joint (102) can be formed by a coupling element (103) projecting from one of both parts (22a) of the subdivided contact piece (22), the coupling element (103) being provided with a spherical outer jacket surface (104) in part of its section, and by a recess (105) worked into the other part (22b) of the contact piece (22), the recess (105) having a corresponding contact surface (106) on the inner jacket surface facing the coupling element (103).

4. The diaphragm chuck in accordance with Claim 2 or 3,
**characterised in that**,
the coupling element (103) is acted on by a compression spring (107) that is supported against the part (22b) of the contact piece (22) that engages in the coupling element (103).

5. The diaphragm chuck in accordance with Claims 2 to 4,
**characterised in that,**
the coupling element (103) can rotate to a limited extent in the recess (105) of the part (22b) of the clamping piece (22) that accommodates the coupling element (103).

6. The diaphragm chuck in accordance with Claim 5,
**characterised in that,**
a pin (108) inserted in the coupling element (103) can be provided for secure rotation, the pin (108) being supported in a hole (109) in the part (22b) of the contact piece (22) that accommodates the coupling element (103), with provision for play in the circumferential direction.

7. The diaphragm chuck in accordance with one or more of Claims 2 to 6,
**characterised in that,**
the width of the coupling element (103) and the internal clearance of the recess (105, 105') that accommodates are dimensioned so that the coupling element (103) can be inserted into the recess (105, 105') in a position turned through 90° in relation to the operating position.

8. The diaphragm chuck in accordance with one or more of Claims 2 to 7,
**characterised in that,**
the separation point of the contact piece (22) is sealed by a labyrinth seal (110) formed onto the end surfaces of one part (22b) or both parts (22a, 22b) of the contact piece (22).

9. The diaphragm chuck in accordance with Claim 1,
**characterised in that,**
the intermediate element (111) consists of an elastically deformable zone (112) integrated into the contact piece (22).

10. The diaphragm chuck in accordance with Claim 9,
**characterised in that,**
each elastically deformable zone (112) is configured as an intermediate piece (113) in the form of a pin or a plate and the zones (112) are formed by recesses (104) worked into the contact pieces (22).

11. The diaphragm chuck in accordance with Claim 1,
**characterised in that,**
the intermediate element (121) is formed by a connecting pin (122) that is positioned in the parts (22a', 22b') of the contact piece (22) that are arranged at a distance from one another in the area of a subdivision of the contact piece (22) and is held in one or both parts (22a, 22b) of the contact piece (22) with axial play.

12. The diaphragm chuck in accordance with Claim 11,
**characterised in that,**
the connecting pin (112) is held on one or both ends by a cross pin (113, 114) inserted in each of the parts of the contact piece, these cross pins (113, 114) engaging in lengthways grooves (115, 116) worked into the connecting pin (112) or directly in the connecting pin (112) itself with axial place.

13. The diaphragm chuck in accordance with Claim 1,
**characterised in that,**
the intermediate element (131) is composed of a threaded rod (132) with one or both ends screwed into threaded holes (113, 114) worked into one or both parts (22a', 22b') of the contact piece (22) in the area of a subdivision of the contact pieces (22a', 22b').

14. The diaphragm chuck in accordance with one or more of Claims 1 to 13,
**characterised in that,**
the contact pieces (22) of the clamping jaws (3) or the clamping heads (21), or at least the parts (22a') of the contact pieces (22) formed directly onto these, are arranged in the diaphragm (4) and the counterweights (8) with radial play (S).

## Revendications

1. Mandrin à diaphragme (1) comprenant des mors de serrage (3) montés dans un corps de mandrin (2) et agissant sur une pièce à usiner (10) qui y est serrée, liés par entraînement avec un diaphragme (4) qui est fixé à l'endroit extérieur de la face frontale (11) du corps de mandrin (2) et qui se laisse déformer par un élément d'actionnement centré et axialement déplaçable (5), où des creux (7) du corps de mandrin (2) portent des contrepoids (8) assignés aux mors de serrage (3) et où les mors de serrage (3) conçus en tant que têtes de serrage (21) sont équipés respectivement d'un embout (22) décalé, orienté axialement en direction du corps de mandrin (2), s'étendant à peu près parallèlement à l'axe de celui-ci et retenu dans des creux (20) pratiqués dans les contrepoids (8), où les mors de serrage (3) se laissent serrer au diaphragme (3) ainsi qu'aux contrepoids (8) moyennant des équipements de serrage (31, 71) en prise dans les embouts (22) et agissant en leur direction axiale, et où les mors de serrage (3) ou les têtes de serrage (21) s'appuient directement sur un premier plan de référence (23) qui, en position de serrage, est orienté parallèlement à l'axe du corps de mandrin (2), et sur un deuxième plan de référence (24) pratiqué sur le diaphragme (4) et orienté perpendiculairement à l'axe du premier,
**caractérisé en ce que,**
les embouts (22) des mors de serrage (3) ou des têtes de serrage (21) comportent, entre ceux-ci et les équipements de serrage (31, 71), respectivement un élément intermédiaire (101 ; 111 ;121 ; 131) qui permettent de compenser des couples de flexion et/ou de torsion des équipements de serrage (31, 71) et qui n'assurent que la transmission de forces de traction axiales sur les mors de serrage (3) ou les têtes de serrage (21).

2. Mandrin à diaphragme d'après la revendication 1,
**caractérisé en ce que**
l'élément intermédiaire (101) est conçu sous la forme d'un joint à rotule (102) disposé au niveau d'une subdivision de l'embout (22).

3. Mandrin à diaphragme d'après la revendication 2,
**caractérisé en ce que**
le joint à rotule (102) est formé par un élément de couplage (103) saillant de l'un des deux parties (22a) de l'embout subdivisé (22) et muni par sections d'une enveloppe extérieure sphérique (104), et d'un creux (105) pratiqué dans l'autre partie (22b) de l'embout (22) et comportant, sur son enveloppe intérieure donnant vers l'élément de couplage (103), une face de portée correspondante (106).

4. Mandrin à diaphragme d'après les revendications 2 ou 3,
**caractérisé en ce**
**qu'**il agit sur l'élément de couplage (103) un ressort de pression (107) appuyé sur la partie (22b) de l'embout (22) dans laquelle s'engrène l'élément de couplage (103).

5. Mandrin à diaphragme d'après une des revendications 2 à 4,
**caractérisé en ce que**
l'élément de couplage (103) est retenu en rotation limitée dans le creux (105) de la partie (22b) de l'embout (22) qui le reçoit.

6. Mandrin à diaphragme d'après la revendication 5,
**caractérisé en ce que**
pour le positionnement antigiratoire de l'élément de couplage (103), il est prévu dans celui-ci un boulon (108) dirigé perpendiculairement à l'axe longitudinal de l'embout (22), qui s'appuie, avec tolérance en direction du pourtour, dans un alésage (109) pratiqué dans la partie (22b) de l'embout (22) recevant l'élément de couplage (103).

7. Mandrin à diaphragme d'après une des revendications 2 à 6,
**caractérisé en ce que**
l'épaisseur de l'élément de couplage (103) et la largeur du creux (105, 105') qui le reçoit sont dimensionnées tel que l'élément de couplage (103) se laisse introduire dans le creux (105, 105') en une position pivotée de 90° par rapport à la position de service.

8. Mandrin à diaphragme d'après une des revendications 2 à 7,
**caractérisé en ce que**
la division de l'embout (22) est étoupée par des labyrinthes (110) formés sur les faces frontales d'une partie (22b) ou des deux parties (22a, 22b) de l'embout (22).

9. Mandrin à diaphragme d'après la revendication 1,
**caractérisé en ce que**
l'élément intermédiaire (111) est constitué d'une zone élastique (112) intégrée dans l'embout (22).

10. Mandrin à diaphragme d'après la revendication 9,
**caractérisé en ce que**
les zones élastiques (112) sont constituées respectivement d'un élément intermédiaire (113) sous la forme d'un boulon ou d'une plaque, formés par des creux (104) pratiqués dans les embouts.

11. Mandrin à diaphragme d'après la revendication 1,
**caractérisé en ce que**
l'élément intermédiaire (121) est formé par une boulon de raccordement (122), qui, au niveau de la subdivision de l'embout (22), est inséré dans les parties écartées (22a', 22b') et retenu avec un jeu axial soit dans une partie soit dans les deux parties (22a, 22b) de l'embout (22).

12. Mandrin à diaphragme d'après la revendication 11,
**caractérisé en ce que**
le boulon de raccordement (112) est retenu sur une ou sur ses deux extrémités moyennant un goujon transversal (113, 114) inséré dans les parties (22a', 22b') de l'embout (22) et s'engrène soit dans des rainures longitudinales (115, 116) pratiquées dans le boulon de raccordement (112) soit avec tolérance axiale directement dans celui-ci.

13. Mandrin à diaphragme d'après la revendication 1,
**caractérisé en ce que**
l'élément intermédiaire (131) est constitué d'une tige filetée (132) qui, au niveau d'une subdivision des parties (22a', 22b'), est vissée sur une ou sur ses deux extrémités dans des filetages (113, 114) prévues dans une ou dans les deux parties (22a', 22b') de l'embout (22).

14. Mandrin à diaphragme d'après une des revendications 1 à 13,
**caractérisé en ce que**
les embouts (22) des mors de serrage (3) ou des têtes de serrage (21), ou du moins les pièces (22a') des embouts (22) formées directement sur ceux-ci, sont disposés avec une tolérance radiale (S) dans le diaphragme (4) et dans les contrepoids (8).
